# EUROPEAN PATENT SPECIFICATION

(11) **EP 4 212 233 B1**
(45) Date of publication and mention of the grant of the patent: **08.04.2026**
(21) Application number: 20953200.1
(22) Date of filing: 08.09.2020
(51) Int. Cl.: B01J 23/30, B01J 23/22, B01J 21/06, B01J 35/30, B01J 35/56, B01J 35/61, B01J 37/00, B01D 53/86, B01D 53/90, F01N 3/10, B01J 37/02, B01J 37/03, F01N 3/20, F01N 13/16, B01J 35/70

(54) **DENITRATION CATALYST MOLDED BODY AND METHOD FOR MANUFACTURING DENITRATION CATALYST MOLDED BODY**
DENITRIERUNGSKATALYSATORFORMKÖRPER UND VERFAHREN ZUR HERSTELLUNG EINES DENITRIERUNGSKATALYSATORFORMKÖRPERS
CORPS MOULÉ DE CATALYSEUR DE DÉNITRATION ET PROCÉDÉ DE FABRICATION D'UN CORPS MOULÉ DE CATALYSEUR DE DÉNITRATION

(43) Date of publication of application: 19.07.2023
(73) Proprietor: The Chugoku Electric Power Co., Inc., Hiroshima-shi, Hiroshima 730-8701 (JP); Tokyo Metropolitan Public University Corporation, Tokyo 163-0926 (JP)
(72) Inventor: KIYONAGA, Eiji, Hiroshima-shi, Hiroshima 730-8701 (JP); YOSHIDA, Kazuhiro, Hiroshima-shi, Hiroshima 730-8701 (JP); MORITA, Keiichiro, Hiroshima-shi, Hiroshima 730-8701 (JP); MURAYAMA, Toru, Hachioji-shi, Tokyo 192-0397 (JP); INOMATA, Yusuke, Hachioji-shi, Tokyo 192-0397 (JP)
(74) Representative: HGF
(86) International application number: PCT/JP2020/033963
(87) International publication number: WO 2022/054132

(56) References cited:
- EP-A1- 2 075 060
- WO-A1-2019/117382
- JP-A- S5 719 040
- JP-A- S52 144 390
- JP-A- S53 125 286
- BO LIU ET AL: "Washcoating of cordierite honeycomb with vanadia-tungsta-titania mixed oxides for selective catalytic reduction of NO with NH3", CATALYSIS SCIENCE & TECHNOLOGY, vol. 5, no. 2, 1 January 2015 (2015-01-01), UK, pages 1241 - 1250, XP055569495, ISSN: 2044-4753, DOI: 10.1039/C4CY01179A

## Description

### TECHNICAL FIELD

The present invention relates to a denitration catalyst molded body and a method for manufacturing a denitration catalyst molded body.

### BACKGROUND ART

One of pollutants exhausted to the air due to combustion of fuel is nitrogen oxides (NO, NO₂, NO₃, N₂O, N₂O₃, N₂O₄, and N₂O₅). Since the nitrogen oxides cause acid rain, ozone layer depletion, photochemical smog, and the like to considerably affect the environment and human bodies, treatment of the nitrogen oxides has been an important object.

Known as art to remove the nitrogen oxides is a selective catalytic reduction reaction using ammonia (NH₃) as a reductant (NH₃-SCR). As described in Patent Document 1, a commonly used catalyst for the selective catalytic reduction reaction has titanium oxide as a support for supporting vanadium oxide. Titanium oxide, which has low activity to sulfur oxides and high stability, is considered to be the best support.

Meanwhile, vanadium oxide, which plays a major role in the NH₃-SCR, oxidizes SO₂ into SO₃, and therefore approximately 1 wt% or more of vanadium oxide cannot be supported in the catalyst. In the conventional NH₃-SCR, a catalyst in which vanadium oxide is supported on the titanium oxide support produces almost no reaction at low temperature, and therefore the catalyst is necessarily used at a high temperature of 350 to 400°C.

Thereafter, the present inventors found a denitration catalyst used for denitration at 200°C or lower (Patent Document 2). The catalyst has 43 wt% or more of vanadium pentoxide and a BET specific surface area of 30 m²/g or more.

Patent Document 1: Japanese Unexamined Patent Application, Publication No.2004-275852
Patent Document 2: PCT International Publication No. WO2018/047356
Patent Document 3: PCT International Publication No. WO2019/117382 discloses a metal structure-based denitrification catalyst, for selective catalytic reduction, using a coating slurry and a method for preparing same.
Patent Document 4: EP2075060 discloses a catalyst having higher mercury oxidation performance than a conventional catalyst without increasing catalyst quantity or enhancing SO2 oxidation performance and constitutes an oxidation catalyst for metal mercury, which contains a molybdenum and vanadium complex oxide, for example, MoV₂O₈, as a main component having a catalytic activity and which is formed by placing the molybdenum and vanadium complex oxide in layers only on the surface of a plate-like or honeycomb-like porous carrier. The porous carrier contains Ti and W and has a function of an NOx removal catalyst as a whole.

### DISCLOSURE OF THE INVENTION

### Problems to be Solved by the Invention

The present inventors have made intensive investigation to attempt to further improve the denitration catalyst disclosed in Patent Document 2, and consequently found a denitration catalyst exhibiting further excellent reduction rate activity of nitrogen oxide. The present inventors have found a denitration catalyst molded body in which this denitration catalyst is supported on a support, and a method for manufacturing the same.

An object of the present invention is to provide a denitration catalyst molded body having a supported denitration catalyst having excellent denitration efficiency at low temperatures in a selective catalytic reduction reaction using ammonia as a reductant, as well as a method for manufacturing the same.

### Means for Solving the Problems

(1) The present invention relates to a denitration catalyst molded body comprising a denitration catalyst layer formed thereon, the denitration catalyst layer comprising a denitration catalyst and a binder component, in which the denitration catalyst contains: vanadium oxide as a main component; and a second metal, the vanadium oxide is contained in the denitration catalyst at 50 wt% or more in terms of vanadium pentoxide, a content of the second metal is 1 wt% or more and 40 wt% or less in terms of an oxide, the second metal is at least one selected from the group consisting of Co, W, Mo, Nb, Ce, Sn, Ni, Fe, Cu, Zn, and Mn, and the binder component contains Ti.
(2) The denitration catalyst molded body according to (1), in which a supported weight of the denitration catalyst is 10 g/m² or more per geometrical specific surface area of the denitration catalyst molded body.
(3) The denitration catalyst molded body according to (1) or (2), in which a weight ratio between the denitration catalyst and the binder component is the denitration catalyst / the binder component of 89/11 to 20/80.
(4) The denitration catalyst molded body according to any one of (1) to (3), in which the denitration catalyst layer has a thickness of 8.9 µm or more.
(5) A method for manufacturing the denitration catalyst molded body according to any one of (1) to (4), comprising: an applying step of applying a denitration catalyst coating liquid containing the denitration catalyst and the binder component on a support; a drying step of drying the support on which the denitration catalyst coating liquid is applied; and a calcining step of calcining the support on which the denitration catalyst coating liquid is applied, in which the denitration catalyst coating liquid has a viscosity of 3.0 mPa·s or higher.
(6) The method for manufacturing the denitration catalyst molded body according to (5), in which the applying step and the drying step are each performed once, and a supported weight of the denitration catalyst is 10 g/m² or more per geometrical specific surface area of the denitration catalyst molded body.

### Effects of the Invention

The present invention can provide: a denitration catalyst molded body having a supported denitration catalyst having excellent denitration efficiency at a low temperature in a selective catalytic reduction reaction using ammonia as a reductant; and a method for manufacturing the same.

### BRIEF DESCRIPTION OF THE DRAWINGS

FIG. 1 is a graph indicating NO conversions of denitration catalyst molded bodies of Examples and Comparative Examples;
FIG. 2 is a graph indicating catalyst supported amounts of the denitration catalyst molded bodies of Examples and Comparative Examples;
FIG. 3 is a chart indicating a relationship between the catalyst supported amount and the NO conversion of the denitration catalyst molded bodies of Examples and Comparative Examples;
FIG. 4 is a chart indicating a relationship between the catalyst supported amount and the NO conversion of the denitration catalyst molded bodies of Examples and Comparative Examples;
FIG. 5 is a graph indicating a relationship between the number of times of applying and the NO conversion of the denitration catalyst molded bodies of Examples and Comparative Examples;
FIG. 6 is a graph indicating a relationship between the number of times of applying and the catalyst supported amount of the denitration catalyst molded bodies of Examples and Comparative Examples;
FIG. 7 is a graph indicating a relationship between a ratio of a denitration catalyst / a binder and an NO conversion;
FIG. 8 is a graph indicating a relationship between the ratio of the denitration catalyst / the binder and a denitration reaction rate;
FIG. 9 is a chart indicating a relationship between a pH of denitration catalyst coating liquids and the NO conversion of Examples and Comparative Examples;
FIG. 10 is a chart indicating a relationship between the pH of the denitration catalyst coating liquids and the NO conversion of Examples and Comparative Examples;
FIG. 11 is a chart indicating a relationship between the pH of the denitration catalyst coating liquids and the NO conversion of Examples;
FIG. 12 is a chart indicating a relationship between the pH of the denitration catalyst coating liquids and the NO conversion of Examples;
FIG. 13 is a chart indicating a relationship between a viscosity of the denitration catalyst coating liquids and the NO conversion of Examples and Comparative Examples;
FIG. 14 is a chart indicating a relationship between the viscosity of the denitration catalyst coating liquids and the NO conversion of Examples and Comparative Examples;
FIG. 15 is a chart indicating a relationship between the viscosity of the denitration catalyst coating liquids and the NO conversion of Examples; and
FIG. 16 is a chart indicating a relationship between the viscosity and the NO conversion of the denitration catalyst coating liquids of Examples.

### PREFERRED MODE FOR CARRYING OUT THE INVENTION

Hereinafter, an embodiment of the present invention will be described. A denitration catalyst molded body according to the present embodiment has a denitration catalyst layer formed on the surface thereof using a denitration catalyst coating liquid containing a denitration catalyst and a binder component.

### <Denitration Catalyst>

The denitration catalyst according to the present embodiment contains: vanadium oxide as a main component; and a second metal. The vanadium oxide is contained in the denitration catalyst at 50 wt% or more in terms of vanadium pentoxide. The second metal is at least one selected from the group consisting of Co, W, Mo, Nb, Ce, Sn, Ni, Fe, Cu, Zn, and Mn. A content of the second metal in the denitration catalyst is 1 wt% or more and 40 wt% or less in terms of an oxide. The denitration catalyst according to the present embodiment exhibits high denitration efficiency compared with conventionally used denitration catalysts even under a low temperature environment.

### (Vanadium Oxide)

Examples of the vanadium oxide used for the denitration catalyst according to the present embodiment include vanadium (II) oxide (VO), vanadium (III) trioxide (V₂O₃), vanadium (IV) tetroxide (V₂O₄), and vanadium (V) pentoxide (V₂O₅). The vanadium oxide is preferably vanadium pentoxide. The V atom in vanadium pentoxide may have a valency of five, four, three, or two during the denitration reaction.

The vanadium oxide is contained in the denitration catalyst at 50 wt% or more, preferably 60 wt% or more, in terms of vanadium pentoxide.

### (Second Metal)

The second metal used for the denitration catalyst according to the present embodiment is at least one selected from the group consisting of Co, W, Mo, Nb, Ce, Sn, Ni, Fe, Cu, Zn, and Mn. Containing the second metal in the denitration catalyst containing vanadium oxide as a main component can exhibit high denitration efficiency compared with conventional denitration catalysts even under a low temperature environment. The reason of obtaining the above effect is presumably as follows. Mixing the second metal as an impurity in vanadium oxide as the denitration catalyst forms amorphous material to generate distortion on a line or plane in a crystalline lattice in a crystalline structure of the vanadium oxide. This distortion is considered to increase Lewis acidity of the vanadium oxide to exhibit the high denitration efficiency. In the denitration catalyst according to the present embodiment, the second metal may substitute a vanadium site to form an oxide of a composite metal, or the denitration catalyst containing the vanadium oxide as a main component may contain an oxide of the second metal. Both of them may be acceptable.

Among the second metals, Co, Mo, Ce, Sn, Ni, and Fe are preferable from the viewpoint of ability to accelerate an oxidation-reduction cycle of the vanadium pentoxide. Among the second metals, Co is preferable in terms of its strong oxidation power. Among the second metals, W, Mo, and Nb are preferable from the viewpoint of functioning as a solid acid and providing adsorption sites for ammonia to allow ammonia to be efficiently contacted with NO to accelerate the reaction. The second metal is preferably W.

In the denitration catalyst according to the present embodiment, a content of the second metal is 1 wt% or more and 40 wt% or less in terms of an oxide. The content of the second metal is preferably 2 wt% or more and 38 wt% or less in terms of an oxide. The content of the second metal is more preferably 2 wt% or more and 10 wt% or less in terms of an oxide. The content of the second metal is more preferably 2 wt% or more and 7 wt% or less in terms of an oxide. The content of the second metal is more preferably 3 wt% or more and 7 wt% or less in terms of an oxide. The content of the second metal is more preferably 3 wt% or more and 5 wt% or less in terms of an oxide. The content of the second metal is more preferably 3 wt% or more and 4 wt% or less in terms of an oxide.

With the denitration catalyst according to the present embodiment, a selective catalytic reduction reaction using a denitration catalyst using Co as the second metal and with a Co content of 1 wt% to 10 wt% in terms of an oxide at a reaction temperature of 200°C or lower exhibited an NO conversion of 79% to 100% in the absence of moisture. A similar reaction exhibited an NO conversion of 38% to 90% in the presence of moisture. For example, using a denitration catalyst with a Co content of 3.1 wt% in terms of an oxide similarly exhibited an NO conversion of 89.1% in the absence of moisture. A similar reaction exhibited an NO conversion of 73.7% in the presence of moisture.

With the denitration catalyst according to the present embodiment, a selective catalytic reduction reaction using a denitration catalyst using W as the second metal and with a W content of 12 wt% to 38 wt% in terms of an oxide at a reaction temperature of 200°C or lower exhibited an NO conversion of 83% to 96% in the absence of moisture. A similar reaction exhibited an NO conversion of 43% to 55% in the presence of moisture. For example, using a denitration catalyst with a W content of 8.4 wt% in terms of an oxide similarly exhibited an NO conversion of 100% in the absence of moisture. A similar reaction exhibited an NO conversion of 92.2% in the presence of moisture.

With the denitration catalyst according to the present embodiment, a selective catalytic reduction reaction using a denitration catalyst using Mo as the second metal and with a Mo content of 5.4 wt% in terms of an oxide at a reaction temperature of 200°C or lower exhibited an NO conversion of 91.2% in the absence of moisture. A similar reaction exhibited an NO conversion of 71.3% in the presence of moisture.

With the denitration catalyst according to the present embodiment, a selective catalytic reduction reaction using a denitration catalyst using Nb as the second metal and with a Nb content of 2 wt% to 16 wt% in terms of an oxide at a reaction temperature of 200°C or lower exhibited an NO conversion of 90% to 97% in the absence of moisture. A similar reaction exhibited an NO conversion of 50% to 73% in the presence of moisture.

With the denitration catalyst according to the present embodiment, a selective catalytic reduction reaction using a denitration catalyst using Ce as the second metal and with a Ce content of 6.4 wt% in terms of an oxide at a reaction temperature of 200°C or lower exhibited an NO conversion of 82.1% in the absence of moisture. A similar reaction exhibited an NO conversion of 71.7% in the presence of moisture.

With the denitration catalyst according to the present embodiment, a selective catalytic reduction reaction using a denitration catalyst using Sn as the second metal and with a Sn content of 5.6 wt% in terms of an oxide at a reaction temperature of 200°C or lower exhibited an NO conversion of 82.6% in the absence of moisture. A similar reaction exhibited an NO conversion of 62.4% in the presence of moisture.

With the denitration catalyst according to the present embodiment, a selective catalytic reduction reaction using a denitration catalyst using Ni as the second metal and with a Ni content of 2.9 wt% in terms of an oxide at a reaction temperature of 200°C or lower exhibited an NO conversion of 80.5% in the absence of moisture. A similar reaction exhibited an NO conversion of 70.1% in the presence of moisture.

With the denitration catalyst according to the present embodiment, a selective catalytic reduction reaction using a denitration catalyst using Fe as the second metal and with an Fe content of 3.1 wt% in terms of an oxide at a reaction temperature of 200°C or lower exhibited an NO conversion of 80.8% in the absence of moisture. A similar reaction exhibited an NO conversion of 55.1% in the presence of moisture.

With the denitration catalyst according to the present embodiment, a selective catalytic reduction reaction using a denitration catalyst using Cu as the second metal and with a Cu content of 3.0 wt% in terms of an oxide at a reaction temperature of 200°C or lower exhibited an NO conversion of 98.8% in the absence of moisture. A similar reaction exhibited an NO conversion of 81.0% in the presence of moisture.

With the denitration catalyst according to the present embodiment, a selective catalytic reduction reaction using a denitration catalyst using Zn as the second metal and with a Zn content of 3.1 wt% in terms of an oxide at a reaction temperature of 200°C or lower exhibited an NO conversion of 85.8% in the absence of moisture. A similar reaction exhibited an NO conversion of 65.4% in the presence of moisture.

With the denitration catalyst according to the present embodiment, a selective catalytic reduction reaction using a denitration catalyst using Mn as the second metal and with a Mn content of 3.3 wt% in terms of an oxide at a reaction temperature of 200°C or lower exhibited an NO conversion of 86.0% in the absence of moisture. A similar reaction exhibited an NO conversion of 66.0% in the presence of moisture.

A selective catalytic reduction reaction using a denitration catalyst containing no second metal at a reaction temperature of 200°C or lower exhibited an NO conversion of as low as 82.3% in the absence of moisture. A similar reaction exhibited an NO conversion of as low as 47.2% in the presence of moisture.

A selective catalytic reduction reaction using a denitration catalyst using W as the second metal and with a W content of 62 wt% to 100 wt% in terms of an oxide at a reaction temperature of 200°C or lower exhibited an NO conversion of as low as 3% to 69% in the absence of moisture. A similar reaction exhibited an NO conversion of as low as 0% to 29% in the presence of moisture.

### (Oxide of Composite Metal)

The denitration catalyst according to the present embodiment preferably contains an oxide of composite metal of vanadium and the second metal. When W is used as the second metal, for example, the oxide of the composite metal is produced by using metatungstic acid as a precursor. Observing a TEM image of the produced oxide of the composite metal can confirm that V sites in a crystalline lattice of the vanadium pentoxide are substituted with W. That is, W is atomically isolated, and the production of the oxide of the composite metal can be confirmed.

With the denitration catalyst according to the present embodiment, a selective catalytic reduction reaction using a denitration catalyst using W as the second metal, producing an oxide of a composite metal of vanadium and W, and with a W content of 2.5 wt% to 11.8 wt% in terms of an oxide at a reaction temperature of 150°C exhibited an NO conversion of 85% to 100% in the absence of moisture. A similar reaction exhibited an NO conversion of 62% to 92% in the presence of moisture.

### (Third Metal)

In the denitration catalyst according to the present embodiment, a third metal is preferably further used in addition to the second metal. In this case, it is preferable that W be used as the second metal and Cu be used as the third metal. An upper limit of a content of Cu in terms of an oxide as the third metal is preferably 13 wt%.

With the denitration catalyst according to the present embodiment, a selective catalytic reduction reaction using a denitration catalyst using W as the second metal, with a W content of 8.4 wt% in terms of an oxide, using Cu as the third metal, and with a Cu content of 3.0 wt% in terms of an oxide at a reaction temperature of 200°C or lower exhibited an NO conversion of 89.2% in the absence of moisture. A similar reaction exhibited an NO conversion of 79.2% in the presence of moisture.

### (Other Substance)

The denitration catalyst according to the present embodiment may contain another substance within a range not inhibiting the effect of the present invention. For example, the denitration catalyst according to the present embodiment preferably further contain carbon in addition to the above. It is considered that the denitration catalyst containing carbon as an impurity generates distortion on a line or plane in a crystalline lattice in a crystalline structure of the vanadium oxide to exhibit high denitration efficiency under a low temperature environment. A content of carbon in the denitration catalyst is preferably 0.05 wt% or more and 3.21 wt% or less in the denitration catalyst. The content of carbon is preferably 0.07 wt% or more and 3.21 wt% or less. The content of carbon is more preferably 0.11 wt% or more and 3.21 wt% or less. The content of carbon is more preferably 0.12 wt% or more and 3.21 wt% or less. The content of carbon is more preferably 0.14 wt% or more and 3.21 wt% or less. The content of carbon is more preferably 0.16 wt% or more and 3.21 wt% or less. The content of carbon is more preferably 0.17 wt% or more and 3.21 wt% or less. The content of carbon is more preferably 0.70 wt% or more and 3.21 wt% or less.

Since a calcination temperature is near 300°C, the denitration catalyst according to the present embodiment is preferably used for a denitration reaction at 300°C or lower. A denitration reaction at a reaction temperature of 200°C or lower is also preferable because high denitration efficiency can be obtained. The denitration reaction at a reaction temperature of 200°C or lower is preferable because SO₂ is not oxidized into SO₃. The reaction temperature is more preferably 100 to 200°C, and the reaction temperature is further preferably 160 to 200°C. The reaction temperature may be 80 to 150°C.

### <Binder Component>

The binder component is contained in the denitration catalyst layer together with the denitration catalyst. The binder component allows the denitration catalyst to adhere to be supported on a support, described later, and to form the denitration catalyst layer. The binder component contains Ti. Ti contained as the binder component can favorably maintain the catalytic activity of the denitration catalyst.

Ti contained as the binder component may be contained as, for example, an oxide, a composite oxide, a nitride, or a compound such as organic and inorganic salt. Ti is preferably contained in the binder component as titanium dioxide (TiO₂). The titanium dioxide (TiO₂) may have a crystalline structure of any of rutile-type, an anatase-type, and brookite-type crystalline structures. A particle diameter of the titanium dioxide (TiO₂) is not particularly limited, and preferably 5 to 50 nm, for example.

The binder component may contain an inorganic component other than Ti. For example, inorganic components such as Al, Zr, and Si may be contained within a range not inhibiting the effect of the present invention. These inorganic components are not particularly limited, and may be contained as an oxide, a composite oxide, a nitride, or a compound such as an organic and inorganic salts. In addition to the above, the binder component may contain an organic component for regulating a viscosity. For example, at least any one of ethylene glycol, carboxymethylcellulose, and polyvinyl alcohol may be contained as the organic component.

### <Denitration Catalyst Molded Body>

The denitration catalyst molded body according to the present embodiment has a denitration catalyst layer formed on a surface of a support, such as a honeycomb substrate, using a denitration catalyst coating liquid containing the denitration catalyst and the binder component. The support is not particularly limited, and conventionally known supports such as a honeycomb substrate can be used. For example, a metallic honeycomb substrate made of aluminum, tin, stainless steel, or the like may be used, and a ceramic honeycomb substrate mainly composed of titanium oxide, cordierite, silicon carbide, silicon nitride, zeolite, or the like may also be used.

A supported weight of the denitration catalyst is preferably 10 g/m² or more per geometrical specific surface area of the denitration catalyst molded body. The geometrical specific surface area means a specific surface area calculated from an actual size of the denitration catalyst molded body and is not affected by its surface roughness. The supported weight of the denitration catalyst is more preferably 20 g/m² or more, and further preferably 30 g/m² or more.

### (Denitration Catalyst Layer)

In the denitration catalyst layer containing the denitration catalyst and the binder component, a weight ratio between the denitration catalyst and the binder component is preferably 89/11 to 20/80. The weight ratio is further preferably 80/20 to 20/80.

A thickness of the denitration catalyst layer is preferably 8.9 µm or more. This thickness can yield preferable denitration efficiency. The thickness of the denitration catalyst layer is more preferably 11 µm or more. The thickness of the denitration catalyst layer is further preferably 16 µm or more. The thickness of the denitration catalyst layer is most preferably 28 µm or more.

### (Denitration Catalyst Coating Liquid)

In the denitration catalyst coating liquid comprising the denitration catalyst and the binder component, a weight ratio between the denitration catalyst and the binder component is preferably 89/11 to 20/80. The weight ratio is further preferably 80/20 to 20/80.

The denitration catalyst coating liquid comprising the denitration catalyst and the binder component preferably has a pH of 2.0 or lower. The denitration catalyst coating liquid having a pH of 2.0 or lower can yield a preferable NO conversion of the denitration catalyst. The pH of the denitration catalyst coating liquid is more preferably 1.5 or lower.

The denitration catalyst coating liquid comprising the denitration catalyst and the binder component preferably has a viscosity of 3.0 mPa·s or higher. The denitration catalyst coating liquid having a viscosity of 3.0 mPa·s or higher can yield a preferable NO conversion of the denitration catalyst. The viscosity of the denitration catalyst coating liquid is more preferably 8.0 mPa·s or higher, and further preferably 60 mPa·s or higher. An upper limit of the viscosity of the denitration catalyst coating liquid is not particularly limited, and preferably 430 mPa·s or lower from the viewpoint of coatability.

### <<Method of Preparing Denitration Catalyst Coating Liquid>>

The denitration catalyst coating liquid according to the present embodiment is prepared by mixing the denitration catalyst and the binder component. The vanadium oxide in the denitration catalyst is contained in the denitration catalyst coating liquid by mixing a vanadate salt, for example. As the vanadate salt, ammonium vanadate, magnesium vanadate, strontium vanadate, barium vanadate, zinc vanadate, lead vanadate, lithium vanadate, and the like may be used, for example.

The second metal and the third metal in the denitration catalyst are contained in the denitration catalyst coating liquid by mixing a chelate complex, hydrate, ammonium compound, or phosphate compound of each metal, for example. Examples of the chelate complex include complexes of oxalic acid, citric acid, and the like. Examples of the hydrate include (NH₄)₁₀W₁₂O₄₁·5H₂O and H₃PW₁₂O₄₀·nH₂O. Examples of the ammonium compound include (NH₄)₁₀W₁₂O_{41·}5H₂O. Examples of the phosphate compound include H₃PW₁₂O₄₀·nH₂O.

The binder component containing Ti in the denitration catalyst may be mixed in the denitration catalyst coating liquid by using a powder of a titanium compound such as titanium dioxide, for example. Alternatively, the binder component may be mixed in the denitration catalyst coating liquid by using a dispersion or fluid, such as sol and slurry, of a compound containing Ti. Examples of a sol containing titanium dioxide (TiO₂) as a dispersoid include: a sol containing water as a dispersion medium and using a strong acid such as hydrochloric acid and nitric acid as a dispersion stabilizer; or a sol with a neutral liquid property and imparted dispersion stability by a surface treatment with silica, an aluminum compound, a phosphate salt, and the like.

When the denitration catalyst coating liquid is prepared, a component other than the above may be contained. For example, a chelate compound may be contained in the denitration catalyst coating liquid. Examples of the chelate compound include: compounds having a plurality of carboxyl groups, such as oxalic acid and citric acid; acetylacetonates; compounds having a plurality of amino groups, such as ethylenediamine; and compounds having a plurality of hydroxyl groups, such as ethylene glycol. To regulate the pH of the denitration catalyst coating liquid, an alkaline component such as ammonia may be contained.

### <<Method of Manufacturing Denitration Catalyst Molded Body>>

A method of manufacturing a denitration catalyst molded body according to the present embodiment includes: an applying step of applying the prepared denitration catalyst coating liquid on a support, such as a honeycomb substrate; a drying step of drying the support, such as a honeycomb substrate, on which the denitration catalyst coating liquid is applied; and a calcining step of calcining the support, such as a honeycomb substrate, on which the denitration catalyst coating liquid is applied.

The applying step is not particularly limited, and the denitration catalyst coating liquid can be applied on the support by immersing the support, such as a honeycomb substrate, in the prepared denitration catalyst coating liquid.

The drying step is a step of evaporating a solvent such as water contained in the catalyst coating liquid to dry the support. The drying temperature is not particularly limited, and may be 120°C, for example.

The calcining step is a step of calcining the support, such as a honeycomb substrate, on which the denitration catalyst coating liquid is applied at a predetermined temperature. The calcining temperature is preferably 270°C or lower. The calcining temperature at 270°C or lower locally disturbs the structure of the vanadium oxide crystals contained in the denitration catalyst to exhibit high denitration efficiency. Specifically, it is presumed that a site where an oxygen atom is absent is generated in the crystalline structure of the vanadium oxide to exhibit high denitration efficiency.

The applying step and the drying step are preferably each performed once to enable to set the supported weight of the denitration catalyst to be 10 g/m² or more (preferably 20/m² or more, more preferably 30 g/m² or more) per geometrical specific surface area of the denitration catalyst molded body. This procedure can simplify the manufacturing step of the denitration catalyst molded body. The applying step and the drying step may be repeated a plurality of numbers of times. For examples, the applying step and the drying step may be repeated twice or more.

The present invention is not limited to the above embodiment, and includes modifications, improvements, and the like thereof within a range that can achieve the object of the present invention.

### EXAMPLES

Hereinafter, the present invention will be more specifically described. The present invention is not limited by these Examples.

### (Example 1)

Ammonium vanadate (NH₄VO₃) and oxalic acid ((COOH)₂) were dissolved in pure water to synthesize a precursor complex. Into this precursor complex, an oxalate complex of tungsten (W), which was the second metal, was added so that tungsten (W) was 3.5 mol% in terms of metal atoms. The obtained vanadium-other metal complex mixture was calcined twice with an electric furnace at a temperature of 300°C for 4 hours to obtain a denitration catalyst of vanadium pentoxide containing tungsten (W).

As the binder component, 0.95 g of commercially available TKS-201 (titanium dioxide sol, TAYCA CORPORATION.) was diluted with approximately 9 ml of water, and 1.2 g of the above denitration catalyst was added and mixed to obtained a denitration catalyst coating liquid. A honeycomb substrate (made of cordierite, an aperture: 200 cpsi, a pore size: 1.45 mm square, a wall thickness: 0.35 mm, and size: 5 mm × 5 mm × 50 mm) was immersed in the denitration catalyst coating liquid, and heated at 120°C to evaporate water. The honeycomb substrate was calcined at 300°C for 4 hours to obtain a denitration catalyst molded body having a denitration catalyst layer of Example 1 formed thereon.

### (Examples2 to 5, Comparative Examples1 to 5)

Denitration catalysts containing binders of Examples 2 to 5 and Comparative Examples 1 to 5 were obtained in the same manner as in Example 1 except that binder components shown in Table 1 were used. The binder names summarized in Table 1 were as follows. Used for Comparative Example 4 was a sample containing no binder component and using a honeycomb substrate immersed in a dispersion of the denitration catalyst dispersed in water to be calcined. Used for Comparative Example 5 was a sample of only the honeycomb substrate without applying the denitration catalyst coating liquid. TKS-202 (titanium dioxide sol, TAYCA CORPORATION.)
STS-01 (titanium dioxide sol, ISHIHARA SANGYO KAISHA, LTD.)
STS-02 (titanium dioxide sol, ISHIHARA SANGYO KAISHA, LTD.)
TTO-W-5 (neutral titanium dioxide sol (rutile crystal),
ISHIHARA SANGYO KAISHA, LTD.)
ZR-40BL (zirconia aqueous sol, Nissan Chemical Corporation)
OXS (silica sol, Nissan Chemical Corporation)
OUP (colloidal silica, Nissan Chemical Corporation)

**[Table 1]**

| | Binder name | Component | Content of binder component (wt%) | Other component |
|---|---|---|---|---|
| Example 1 | TKS-201 | TiO₂ | 32.5% | HCl (2%) |
| Example 2 | TKS-202 | TiO₂ | 31.5% | HNO₃ (4%) |
| Example 3 | STS-01 | TiO₂ | 30.3% | HNO₃ (1.73%),SO₄ (0.17%), Fe (0.002%) |
| Example 4 | STS-02 | TiO₂ | 30.4% | HCl (1.02%),SO₄ (0.18%), Fe (0.004%) |
| Example 5 | TTO-W-5 | TiO₂ | 31.8% | Pb, As |
| Comparative Example 1 | ZR-40BL | ZrO₂ | 40.6% | Tetramethylammonium carbonate (1%) |
| Comparative Example 2 | OXS | SiO₂ | 10.4% | Na₂O (97ppm) |
| Comparative Example 3 | OUP | SiO₂ | 15.3% | Na₂O(120ppm) |
| Comparative Example 4 | - | - | - | - |
| Comparative Example 5 | - | - | - | - |

### [Measurement of NO Conversion]

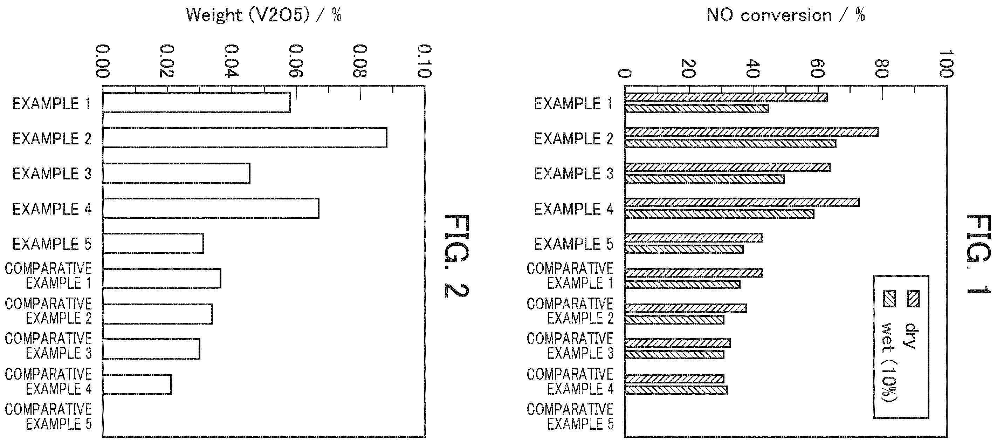

Using the denitration catalyst molded bodies of Examples and Comparative Examples in which the applying and drying of the denitration catalyst coating liquid were repeated four times, an NO conversion was measured. A reaction condition was as follows: reaction temperature was 150°C, reaction gas was 250 ppm NO, 250 ppm NH₃, and 4.0 vol% O₂ in Ar. The measurements were performed under both of a 10% water vapor atmosphere (wet (10%)) or water vapor-free condition (dry). The gas flow rate was 100 ml/min. FIG. 1 shows the results. In FIG. 1, the vertical axis indicates the NO conversion (%).

### [Measurement of Catalyst Supported Amount]

The supported amount of the denitration catalyst in each denitration catalyst molded body of Examples and Comparative Examples used for the measurement of the NO conversion in FIG. 1 was measured. FIG. 2 shows the results. In FIG. 2, the vertical axis indicates the supported amount (g) of the denitration catalyst (V₂O₅).

### [Relationship between Catalyst Supported Amount and NO Conversion]

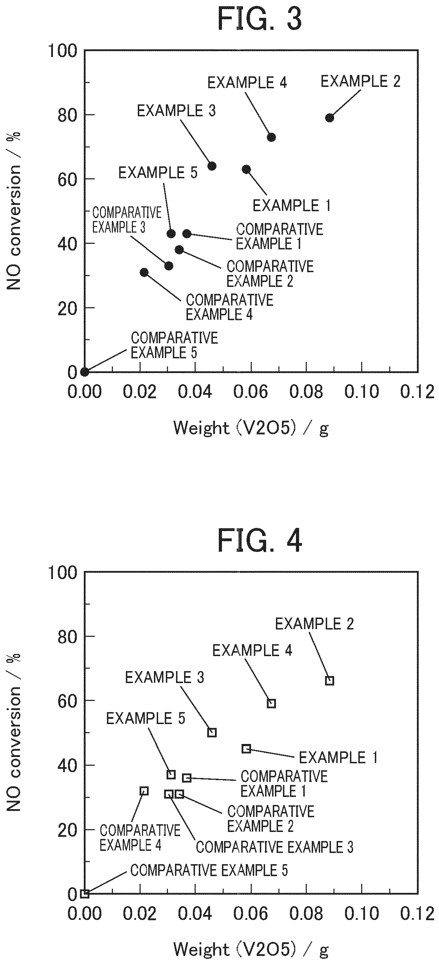

FIG. 3 and FIG. 4 show a relationship between the supported amount of the denitration catalyst and the NO conversion in each denitration catalyst molded body of Examples and Comparative Examples used for the measurement of the NO conversion in FIG. 1. FIG. 3 shows the NO conversion under the water-vapor free condition as the reaction gas condition. FIG. 4 shows the NO conversion under the water vapor atmosphere, similar to FIG. 1. In FIG. 3 and FIG. 4, the vertical axis indicates the NO conversion (%), and the horizontal axis indicates the supported amount (g) of the denitration catalyst (V₂O₅).

From the results in FIG. 1 and FIG. 2, it has been confirmed that the denitration catalyst molded body according to Examples containing Ti as the binder component has higher supported amount of the denitration catalyst than the denitration catalyst molded bodies according to Comparative Examples to yield a preferable NO conversion. From the results in FIG. 3 and FIG. 4, a relationship between the denitration catalyst and the NO conversion is confirmed to be approximately proportional.

### [Relationship between Number of Times of Applying and NO Conversion]

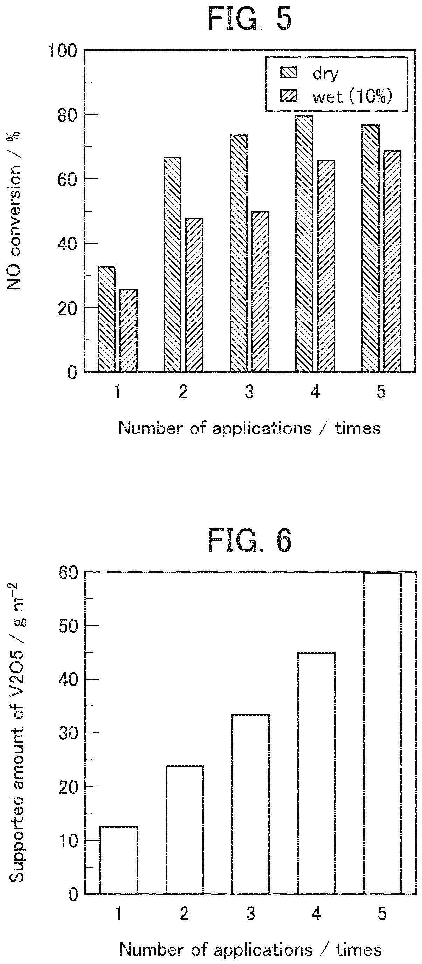

With the denitration catalyst molded body of Example 2, samples in which a number of times of applying and drying the denitration catalyst coating liquid was one to five were produced to measure the NO conversion. The measurements were performed under both of a water vapor atmosphere condition (wet (10%)) and water vapor-free condition (dry), similar to the NO conversion in FIG. 1. FIG. 5 shows the results. In FIG. 5, the vertical axis indicates the NO conversion (%), and the horizontal axis indicates the number of times of applying (times).

### [Relationship between Number of Times of Applying and Catalyst Supported Amount Per Geometrical Specific Surface Area]

With the denitration catalyst molded body of Example 2, samples in which a number of times of applying and drying the denitration catalyst coating liquid was one to five were produced to measure the catalyst supported amount per geometrical specific surface area. FIG. 6 shows the results. In FIG. 6, the vertical axis indicates the supported amount (g) of the denitration catalyst per geometrical specific surface area, and the horizontal axis indicates the number of times of applying (times).

From the results in FIG. 5 and FIG. 6, it has been confirmed that, in the denitration catalyst molded bodies according to Examples, increasing the number of times of applying increases the catalyst supported amount per geometrical specific surface area of the denitration catalyst. It has been also confirmed that, in the denitration catalyst molded bodies according to Examples, applying only once can yield the supported weight of the denitration catalyst per geometrical specific surface area of 10 g/m² or more.

### [Relationship between Number of Times of Applying and Thickness of Denitration Catalyst Layer]

With the denitration catalyst molded body of Example 2, samples in which a number of times of applying and drying the denitration catalyst coating liquid was one to five were produced to measure a relationship between the thickness (µm) of the denitration catalyst layer and the number of times of applying and drying the denitration catalyst coating liquid. The thickness of the denitration catalyst layer was measured by using a scanning electron microscope (JSM-7500F, manufactured by JEOL Ltd.). The measurement was performed under a condition of: fixing the denitration catalyst molded body on a sample stand using a carbon tape; an acceleration voltage of 2 kV; and an emission current of 10 µA. The following Table 2 shows the results.

**[Table 2]**

| Number of times of applying / times | Thickness of denitration catalyst layer / µm |
|---|---|
| 1 | 8.9 |
| 2 | 11 |
| 3 | 16 |
| 4 | 28 |
| 5 | 57 |

From the results in Table 2, it has been confirmed that, in the denitration catalyst molded body of Example 2, a number of times of applying and drying of one or more can yield the thickness of the denitration catalyst layer of 8.9 µm.

### [Measurement of NO Conversion (Changed Ratio of Denitration Catalyst / Binder)]

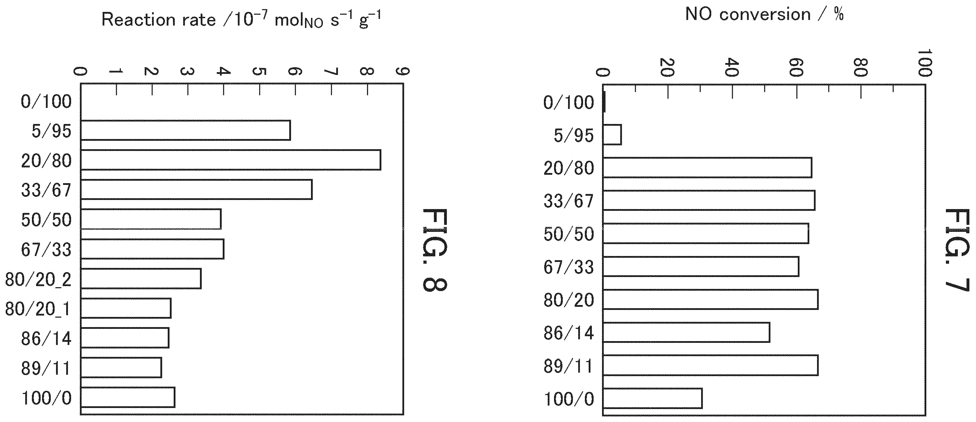

Produced were a plurality of samples having changed ratios between the denitration catalyst and the binder component from the denitration catalyst of Example 2 containing the binder. The samples were supported on honeycomb substrates to produce a plurality of denitration catalyst molded bodies, and NO conversions were measured. Applying and drying were repeated twice to perform twice application. A reaction condition for the NO conversion was as follows. The reaction temperature was 150°C, the reaction gas was 250 ppm NO, 250 ppm NH₃, and 4.0 vol% O₂ in Ar. The gas flow rate was 100 ml/min. FIG. 7 shows the results. In FIG. 7, the vertical axis indicates the NO conversion (%). The horizontal axis indicates a ratio (weight ratio) of the denitration catalyst / the binder component in the denitration catalyst of Example 2 containing the binder.

### [Measurement of Denitration Reaction Rate (Denitration Catalyst Molded Body, Changed Ratio of Denitration Catalyst / Binder)]

Using the denitration catalyst of Example 2 containing the binder, a plurality of denitration catalyst molded bodies were produced similarly to the above measurement of the NO conversion, and denitration reaction rates were measured under the same condition as of the measurement of the NO conversion. FIG. 8 shows the results. In FIG. 8, the vertical axis indicates the reaction rate (/10⁻⁷ mol_{NO}s⁻¹g⁻¹). The horizontal axis indicates a ratio (weight ratio) of the denitration catalyst / the binder component in the denitration catalyst of Example 2 containing the binder. In the horizontal axis of FIG. 8, 80/20_2 indicates the denitration catalyst molded body with the twice application, and 80/20_1 indicates the denitration catalyst molded body with the once application. With denitration catalyst molded bodies other than those of 80/20_1, the applying was performed twice.

From the results in FIG. 7 and FIG. 8, it has been confirmed that setting the ratio of the denitration catalyst / the binder to be 89/11 to 20/80 can yield a preferable NO conversion and denitration reaction rate.

### [Relationship between pH of Denitration Catalyst Coating Liquid and NO Conversion]

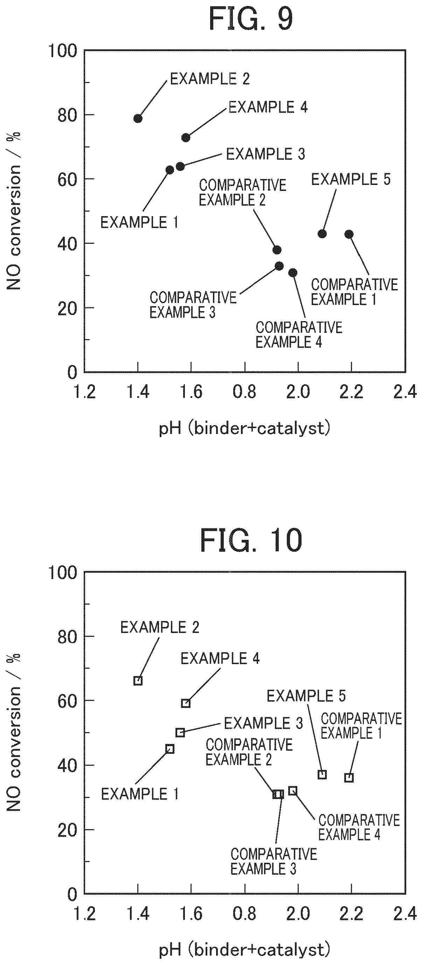

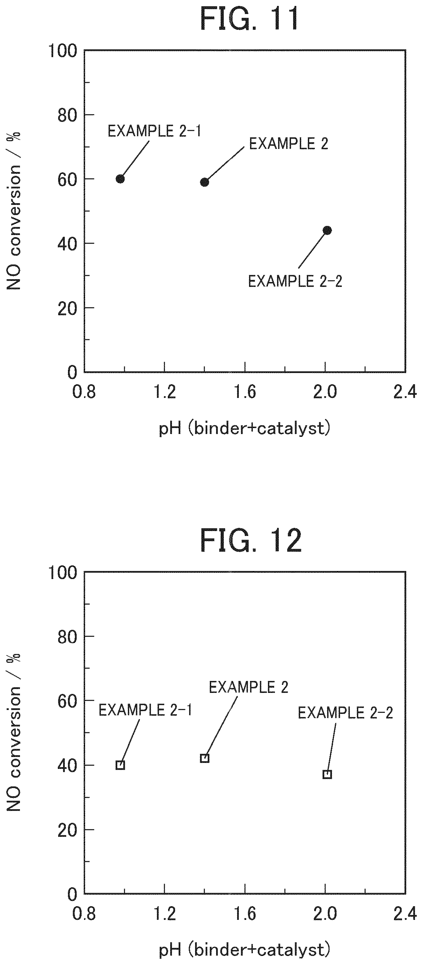

pH of the denitration catalyst coating liquids of Examples and Comparative Examples were measured, and the denitration catalysts were supported on the honeycomb substrates to manufacture denitration catalyst molded bodies in the same manner as in FIG. 1. The calcining condition and the like were same as above, but the applying and drying were repeated four times to perform four-time application. FIG. 9 to FIG. 12 show a relationship between the pH of the denitration catalyst coating liquid and the NO conversion. FIG. 10 shows results of the NO conversions measured under the water vapor atmosphere condition (wet (10%)), same as of the measurement of the NO conversion in FIG. 1. FIG. 9 shows results measured under the water-vapor free condition (dry), same as of the measurement of the NO conversion in FIG. 1. FIG. 11 and FIG. 12 show results of the NO conversions measured by regulating the pH of the denitration catalyst coating liquid of Example 2 with nitric acid and ammonia to produce a denitration catalyst molded body with twice application. FIG. 11 shows results of the NO conversion measured under the same condition as of the NO conversion in FIG. 9, and FIG. 12 shows results thereof under the same condition as of the NO conversion in FIG. 10. In FIG. 9 to FIG. 12, the vertical axis indicates the NO conversion (%), and the horizontal axis indicates the pH of the denitration catalyst coating liquid.

From the results in FIG. 9 to FIG. 12, it has been confirmed that setting the pH of the denitration catalyst coating liquid to be 2.0 or lower can yield a preferable NO conversion.

### [Relationship between Viscosity of Denitration Catalyst Coating Liquid and NO Conversion]

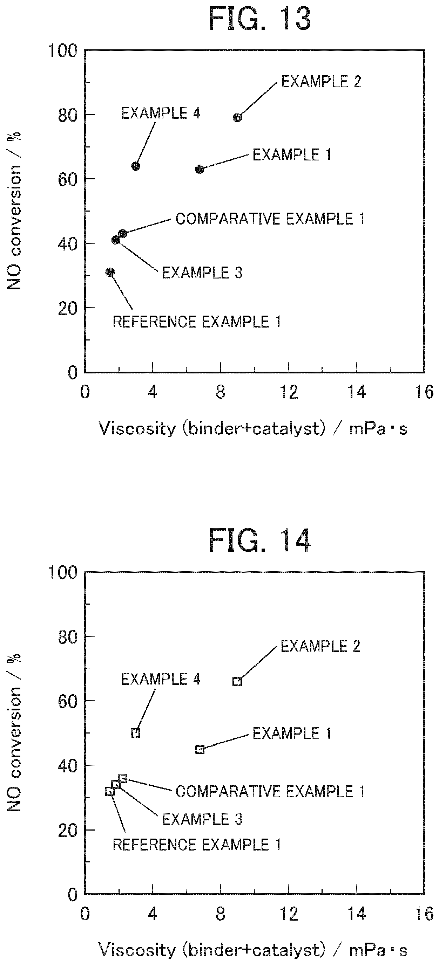

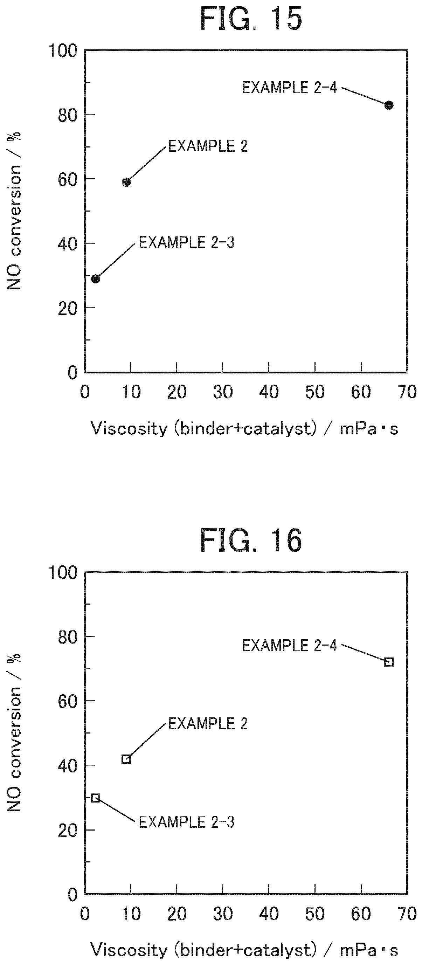

Viscosities of the denitration catalyst coating liquids of Examples and Comparative Examples were measured, and the denitration catalysts were supported on the honeycomb substrates to manufacture denitration catalyst molded bodies in the same manner as in FIG. 1. The calcining condition and the like were same as above, but the applying and drying were repeated four times to perform four-time application. FIG. 13 to FIG. 16 show a relationship between the viscosity of the denitration catalyst coating liquid and the NO conversion. FIG. 14 shows results of the NO conversions measured under the water vapor atmosphere condition (wet (10%)), same condition as the measurement of the NO conversion in FIG. 1. FIG. 13 shows results of the NO conversions measured under the water-vapor free condition (dry), same condition as the measurement of the NO conversion in FIG. 1. FIG. 15 and FIG. 16 show results of the NO conversions measured by regulating the viscosity of the denitration catalyst coating liquid of Example 2 with the addition amount of water to produce a denitration catalyst molded body with twice application. FIG. 15 shows results of the NO conversion measured under the same condition as of the NO conversion in FIG. 13, and FIG. 16 shows results thereof under the same condition as of the NO conversion in FIG. 14. In FIG. 13 to FIG. 16, the vertical axis indicates the NO conversion (%), and the horizontal axis indicates the viscosity (mPa·s) of the denitration catalyst coating liquid.

From the FIG. 13 to FIG. 16, it has been confirmed that setting the viscosity of the denitration catalyst coating liquid to be 3.0 mPa·s or higher can yield a preferable NO conversion.

## Claims

1. A denitration catalyst molded body comprising a denitration catalyst layer formed thereon, the denitration catalyst layer comprising a denitration catalyst and a binder component, wherein
the denitration catalyst contains: vanadium oxide as a main component; and a second metal, the vanadium oxide is contained in the denitration catalyst at 50 wt% or more in terms of vanadium pentoxide, a content of the second metal is 1 wt% or more and 40 wt% or less in terms of an oxide, the second metal is at least one selected from the group consisting of Co, W, Mo, Nb, Ce, Sn, Ni, Fe, Cu, Zn, and Mn, and
the binder component contains Ti.

2. The denitration catalyst molded body according to claim 1, wherein a supported weight of the denitration catalyst is 10 g/m² or more per geometrical specific surface area of the denitration catalyst molded body.

3. The denitration catalyst molded body according to claim 1 or 2, wherein a weight ratio between the denitration catalyst and the binder component is the denitration catalyst / the binder component of 89/11 to 20/80.

4. The denitration catalyst molded body according to any one of claims 1 to 3, wherein the denitration catalyst layer has a thickness of 8.9 µm or more.

5. A method for manufacturing the denitration catalyst molded body according to any one of claims 1 to 4, comprising:
an applying step of applying a denitration catalyst coating liquid containing the denitration catalyst and the binder component on a support;
a drying step of drying the support on which the denitration catalyst coating liquid is applied; and
a calcining step of calcining the support on which the denitration catalyst coating liquid is applied, wherein
the denitration catalyst coating liquid has a viscosity of 3.0 mPa·s or higher.

6. The method for manufacturing the denitration catalyst molded body according to claim 5, wherein the applying step and the drying step are each performed once, and
a supported weight of the denitration catalyst is 10 g/m² or more per geometrical specific surface area of the denitration catalyst molded body.

## Patentansprüche

1. Denitrierungskatalysator-Formkörper mit einer darauf ausgebildeten Denitrierungskatalysatorschicht, wobei die Denitrierungskatalysatorschicht einen Denitrierungskatalysator und eine Bindemittelkomponente enthält, wobei
der Denitrierungskatalysator enthält: Vanadiumoxid als Hauptkomponente; und ein zweites Metall, wobei das Vanadiumoxid in dem Denitrierungskatalysator zu 50 Gew.-% oder mehr, bezogen auf Vanadiumpentoxid, enthalten ist, der Gehalt des zweiten Metalls 1 Gew.-% oder mehr und 40 Gew.-% oder weniger beträgt, bezogen auf ein Oxid, das zweite Metall mindestens ein aus der Gruppe ausgewähltes Metall ist, die aus Co, W, Mo, Nb, Ce, Sn, Ni, Fe, Cu, Zn und Mn besteht, und
die Bindemittelkomponente Ti enthält.

2. Denitrierungskatalysator-Formkörper nach Anspruch 1, wobei ein Auflagegewicht des Denitrierungskatalysators pro geometrischem spezifischen Oberflächenbereich des Denitrierungskatalysator-Formkörpers 10 g/m² oder mehr beträgt.

3. Denitrierungskatalysator-Formkörper nach Anspruch 1 oder 2, wobei ein Gewichtsverhältnis zwischen dem Denitrierungskatalysator und der Bindemittelkomponente folgendermaßen ist: Denitrierungskatalysator / Bindemittelkomponente gleich 89/11 bis 20/80.

4. Denitrierungskatalysator-Formkörper nach einem der Ansprüche 1 bis 3, wobei die Denitrierungskatalysatorschicht eine Dicke von 8,9 µm oder mehr hat.

5. Verfahren zur Herstellung des Denitrierungskatalysator-Formkörpers nach einem der Ansprüche 1 bis 4, umfassend:
einen Auftragungsschritt, bei dem eine Denitrierungskatalysator-Beschichtungsflüssigkeit, die den Denitrierungskatalysator und die Bindemittelkomponente enthält, auf einem Träger aufgetragen wird;
einen Trocknungsschritt, bei dem der Träger, auf dem die Denitrierungskatalysator-Beschichtungsflüssigkeit aufgetragen ist, getrocknet wird; und
einen Kalzinierungsschritt, bei dem der Träger, auf dem die Denitrierungskatalysator-Beschichtungsflüssigkeit aufgetragen ist, kalziniert wird, wobei
die Denitrierungskatalysator Beschichtungsflüssigkeit eine Viskosität von 3,0 mPa·s oder höher hat.

6. Verfahren zur Herstellung des Denitrierungskatalysator-Formkörpers nach Anspruch 5, wobei der Auftragungsschritt und der Trocknungsschritt jeweils einmal durchgeführt werden, und
ein Auflagegewicht des Denitrierungskatalysators pro geometrischem spezifischen Oberflächenbereich des Denitrierungskatalysator-Formkörpers 10 g/m² oder mehr beträgt.

## Revendications

1. Corps moulé de catalyseur de dénitrification sur lequel est formée une couche de catalyseur de dénitrification, la couche de catalyseur de dénitrification contenant un catalyseur de dénitrification et un composant liant, sachant que
le catalyseur de dénitrification contient : de l'oxyde de vanadium comme composant principal ; et un deuxième métal, l'oxyde de vanadium étant contenu dans le catalyseur de dénitrification à raison de 50 % en poids ou plus, par rapport au pentoxyde de vanadium, la teneur en deuxième métal étant de 1 % en poids ou plus et de 40 % en poids ou moins, par rapport à un oxyde, le deuxième métal étant au moins un métal choisi dans le groupe constitué par Co, W, Mo, Nb, Ce, Sn, Ni, Fe, Cu, Zn et Mn, et
le composant liant contient du Ti.

2. Le corps moulé de catalyseur de dénitrification selon la revendication 1, sachant que le poids de revêtement du catalyseur de dénitrification par unité de surface spécifique géométrique du corps moulé de catalyseur de dénitrification est de 10 g/m² ou plus.

3. Le corps moulé de catalyseur de dénitrification selon la revendication 1 ou 2, sachant que le rapport pondéral entre le catalyseur de dénitrification et le composant liant est le suivant : catalyseur de dénitrification / composant liant égal à 89/11 à 20/80.

4. Le corps moulé de catalyseur de dénitrification selon l'une des revendications 1 à 3, sachant que la couche de catalyseur de dénitrification a une épaisseur de 8,9 µm ou plus.

5. Procédé de fabrication du corps moulé de catalyseur de dénitrification selon l'une quelconque des revendications 1 à 4, comprenant :
une étape d'application dans laquelle un liquide de revêtement pour catalyseur de dénitrification contenant le catalyseur de dénitrification et le composant liant est appliqué sur un support ;
une étape de séchage dans laquelle le support sur lequel est appliqué le liquide de revêtement pour catalyseur de dénitrification est séché ; et
une étape de calcination dans laquelle le support sur lequel est appliqué le liquide de revêtement pour catalyseur de dénitrification est calciné, sachant que
le liquide de revêtement pour catalyseur de dénitrification a une viscosité de 3,0 mPa·s ou plus.

6. Le procédé de fabrication du corps moulé de catalyseur de dénitrification selon la revendication 5, sachant que l'étape d'application et l'étape de séchage sont chacune effectuées une fois, et
un poids de revêtement du catalyseur de dénitrification par unité de surface spécifique géométrique du corps moulé de catalyseur de dénitrification est de 10 g/m² ou plus.
